# EUROPÄISCHE PATENTSCHRIFT

(11) **EP 2 669 474 B1**
(45) Veröffentlichungstag und Bekanntmachung des Hinweises auf die Patenterteilung: **07.08.2019**
(21) Anmeldenummer: 12170498.5
(22) Anmeldetag: 01.06.2012
(51) Int. Cl.: F01D 5/14, F01D 5/18, F01D 9/02, F01D 9/06

(54) **Übergangskanal für eine Strömungsmaschine und Strömungsmaschine**
Transition channel for a fluid flow engine and fluid flow engine
Canal de passage pour une turbomachine et turbomachine

(43) Veröffentlichungstag der Anmeldung: 04.12.2013
(73) Patentinhaber: MTU Aero Engines AG, 80995 München (DE)
(72) Erfinder: Dr. Gündogdu, Yavuz, 80809 München (DE); Dr. Engel, Karl, 85221 Dachau (DE)

(56) Entgegenhaltungen:
- EP-A2- 2 390 464
- EP-A2- 2 518 272
- US-A- 3 704 075
- US-A1- 2009 324 400
- US-A1- 2010 209 238

## Beschreibung

Die Erfindung betrifft einen Übergangskanal für eine Strömungsmaschine nach dem Oberbegriff des Patentanspruchs 1 sowie eine Strömungsmaschine.

Ein Übergangs- bzw. Umlenkkanal in einer axialen Strömungsmaschine wie ein Flugzeugtriebwerk leitet eine Hauptströmung von einem stromaufwärtigen Strömungsquerschnitt zu einem radial versetzten Strömungsquerschnitt. Der Übergangskanal hat gewöhnlich einen ringförmigen Querschnitt und ist bspw. zwischen einer Hochdruckturbine und einer Niederdruckturbine (Turning Mid Turbine Frame, TMTF) angeordnet. Bei einer dreiteiligen Auslegung einer Turbine kann der Übergangskanal auch zwischen einer Hochdruckturbine und einer Mitteldruckturbine sowie zwischen der Mitteldruckturbine und einer Niederdruckturbine angeordnet sein. Bei Verdichtem kann ein Übergangskanal die Strömung in analoger Weise von einem stromaufwärtigen zu einem stromabwärtigen Strömungsquerschnitt leiten und bspw. zwischen einem Niederdruckverdichter und einem Hochdruckverdichter angeordnet sein.

Zur Versteifung weist ein Übergangskanal im Allgemeinen gleichartige, über den Umfang verteilte Stützrippen auf. Die Stützrippen bewirken zudem eine Umlenkung der Strömung, insbesondere in Umfangsrichtung, um eine Anströmung zur ersten Laufschaufelreihe der stromabwärtigen Turbine bzw. einer Verdichterstufe zu verbessern.

Die Stützrippen haben üblicherweise eine große relative Dicke, d.h. ein Verhältnis von Profildicke zu Sehnenlänge, und/oder ein kleines Schaufelhöhenverhältnis, d.h. ein Verhältnis von Schaufelhöhe zu Sehnenlänge. Die vergleichsweise große relative Dicke bzw. kleine relative Höhe der Stützrippen kann insbesondere aus statischen Gründen erforderlich sein. Eine solche Geometrie der Stützrippen führt jedoch zu starken Sekundärströmungen. Es entstehen Randbereiche mit verwirbelter Strömung, welche das Strömungsfeld dominieren können. Derartige Sekundärströmungen beeinflussen die Anströmung von nachfolgenden Schaufeln nachteilig. Sie können insbesondere eine maximal mögliche Umlenkung an Nabe und Gehäuse begrenzen und zu Energieübertragungsverlusten führen. Zudem können die Sekundärströmungen zu Anregungen der ersten Laufschaufelreihe der stromabwärtigen Turbine und somit zu einer hohen Geräuschentwicklung führen. Darüber hinaus können die im Vergleich zu konventionellen Statorgeometrien deutlich geringeren Schaufelzahlen der Übergangskanäle aerodynamische Anregungen der nachfolgenden Rotorschaufeln mit fundamentalen Moden, so genannten "Engine Orders", im Arbeitsbereich der Strömungsmaschine bewirken.

Aus der US 2010/0040462 A1 ist eine Gasturbine mit einem ringförmigen Übergangskanal bekannt, der sich von einer Hochdruckturbine zu einer Niederdruckturbine erstreckt. Der Übergangskanal hat eine radial innere Kanalwandung und eine radial äußere Kanalwandung, zwischen denen in Umfangsrichtung verteilt Leitschaufeln angeordnet sind, die jeweils ein Tragflügelprofil zur Umlenkung einer Strömung von einer Eintrittsfläche zu einer Austrittsfläche des Übergangskanals aufweisen. Um einen Anlaufstoß (roll-off) der Strömung im Übergang von einer waagerechten zu einer radial ansteigenden Strömung zu minimieren, weist die innere Mantelfläche einen besonderen Krümmungsverlauf auf.

Ein Kanal innerhalb eines Turbinenaustrittsgehäuses mit Stützrippen, die Durchgangskanäle aufweisen, durch welche ein Teil des Gaskanalfluids aufgrund einer Druckdifferenz zwischen Vorder- und Hinterkante strömt, ist aus der US 2009 324400 A1 bekannt.

Ein Übergangskanal mit Leitschaufeln unterschiedlicher Profildicke ist aus der US 3 704 075 A bekannt.

Ein Turbinenring ist aus der US 20100209238A1 bekannt.

Aus der EP 2 390 464 A2 ist es zur Verbesserung einer Schaufelabströmung und somit zur verbesserten Nachlaufausmischung bekannt, turbinenseitige Laufschaufeln im Bereich ihrer Hinterkante mit einer wellenartigen Profilvariation und/oder einer schlitzartigen Austrittsöffnung zum Ausblasen eines Fluids zu versehen, um die Anströmung einer nachfolgenden Leitschaufelreihe zu verbessern. Die Ausblasöffnung kann dabei in Strömungsrichtung auf der Skelettlinie oder aber im Hinterkantenbereich saug- oder druckseitig angeordnet sein.

Aufgabe der Erfindung ist es, einen Übergangskanal für eine Strömungsmaschine zu schaffen, der die vorgenannten Nachteile beseitigt und eine verbesserte Nachlaufausmischung ermöglicht. Des Weiteren ist es Aufgabe der Erfindung, eine Strömungsmaschine mit einem hohen Wirkungsgrad und mit einer geringen Geräuschentwicklung zu schaffen.

Diese Aufgabe wird gelöst durch einen Übergangskanal mit den Merkmalen des Patentanspruchs 1 und durch eine Strömungsmaschine mit den Merkmalen des Patentanspruchs 12.

Ein erfindungsgemäßer Übergangskanal für eine Strömungsmaschine, insbesondere ein Flugzeugtriebwerk, zum Bilden eines Strömungskanals zwischen einem stromaufwärtigen Strömungsquerschnitt und einem stromabwärtigen Strömungsquerschnitt hat Stützrippen, die sich zwischen einer radial inneren Kanalwandung und einer radial äußeren Kanalwandung erstrecken und jeweils ein Profil zur Umlenkung einer Strömung von einer Eintrittsfläche zu einer Austrittsfläche des Übergangskanals aufweisen. Erfindungsgemäß haben die Stützrippen jeweils im Bereich ihrer Hinterkante eine Profilvariation und/oder zumindest eine Ausblasöffnung zum Ausblasen eines Fluids.

Die Profilvariation und/oder die zumindest eine Ausblasöffnung bewirken eine passive und/oder eine aktive Nachlaufausmischung der Abströmung, wodurch eine schnelle Strömungsberuhigung erfolgt. Als Ergebnis der frühzeitigen Nachlaufausmischung wird die Zuströmung von Rotorschaufeln stromabwärts der Austrittsfläche des Übergangskanals verbessert, so dass Energieübertragungsverluste und aerodynamische Anregungen der Rotorschaufeln minimiert werden. Mittels der Profilvariation bzw. passiven Nachlaufausmischung werden ein saugseitiger Teilstrom und ein druckseitiger Teilstrom bezüglich ihrer Abströmgeschwindigkeit vergleichmäßigt, wodurch Wirbel beim Zusammenführen der Teilströme hinter der Hinterkante reduziert werden, was zu einer frühzeitig beruhigten Nachlaufströmung führt. Mittels der zumindest einen Ausblasöffnung bzw. aktiven Nachlaufausmischung erfolgt eine Energetisierung der Abströmung durch Einblasen eines Fluids, wodurch ebenfalls die Nachlaufausmischung verbessert wird. Zudem werden die Stützrippen durch das Fluid im Bereich Ihrer Hinterkante gekühlt, wodurch deren thermische Belastung reduziert wird. Bei einer Kombination der passiven und der aktiven Nachlaufausmischung zu einer hybridartigen Nachlaufausmischung erfolgt sowohl eine Vergleichmäßigung als auch eine Energetisierung der Abtrömung.

Bei einem Ausführungsbeispiel einer Profilvariation ist die Hinterkante abwechselnd zur Saugseite und zur Druckseite versetzt. Hierdurch hat die Hinterkante eine seitliche bzw. sich in Umfangsrichtung erstreckende Wellenform mit einer Vielzahl von Wellenbergen und Wellentälern, wodurch die Hinterkante vergrößert wird und somit ein saugseitiger und ein druckseitiger Teilstrom quasi aufgefächert werden. Zudem werden die Teilströme durch die Wellenform in radialer Richtung betrachtet abschnittsweise abwechselnd übereinander geführt, so dass nicht nur eine "seitliche" Vermischung, sondern auch eine "radiale" Vermischung erfolgt. Bevorzugterweise ist die Wellenform gleichmäßig ausgebildet und derart, dass die Wellenberge und die Wellentäler die gleichen saugseitigen und druckseitigen Erstreckungen haben.

Bei einem alternativen Ausführungsbeispiel der Profilvariation ist die Hinterkante in Strömungsrichtung betrachtet wellenartig ausgebildet. Hierdurch werden eine Vielzahl von Profilverkürzungen (Wellentäler) und Profilverlängerungen (Wellenberge) geschaffen, wodurch der saugseitige Teilstrom und der druckseitige Teilstrom im Vergleich zu einer herkömmlichen Hinterkante jeweils abschnittsweise zeitlich früher (Wellental) oder zeitlich später (Wellenberg) von der Hinterkante abströmen. Hierdurch wird eine Mischzone abschnittsweise quasi vorverlegt (Wellentäler) und somit eine Vermischung frühzeitig eingeleitet. Bevorzugterweise ist die Wellenform gleichmäßig ausgebildet.

Bei einem Ausführungsbeispiel einer aktiven Nachlaufausmischung tritt die zumindest eine Ausblasöffnung zwischen der Saugseite und der Druckseite aus der Hinterkante aus. Durch diese Maßnahme ist die zumindest eine Ausblasöffnung quasi auf der Skelettlinie der Stützrippe angeordnet und das Fluid wird gleichmäßig zwischen die abströmenden Teilströme eingeblasen, so dass eine Ablenkung des saug- oder des druckseitigen Teilstroms in Umfangsrichtung verhindert wird.

Die zumindest eine Ausblasöffnung ist bevorzugterweise als ein Längsschlitz ausgebildet, der sich von der inneren Kanalwandung zur äußeren Kanalwandung erstreckt. Des Weiteren ist bei dieser Variante eine saugseitige Schlitzfläche wellenförmig und eine druckseitige Schlitzfläche variationslos ausgebildet. Hierdurch ist die saugseitige Schlitzfläche gegenüber der druckseitigen Schlitzfläche vergrößert. Zudem wird der Fluidstrom durch die Wellenform saugseitig quasi aufgefächert.

Ergänzend kann eine zur saugseitigen Schlitzfläche entgegengesetzte saugseitige Abströmfläche wellenförmig ausgebildet sein. Hierdurch ist die saugseitige Schlitzfläche mit einer Profilvariation versehen, so dass in Kombination mit der zumindest einen Ausblasöffnung sowohl eine passive als auch eine aktive Nachlaufausmischung erfolgt.

Bei einem Ausführungsbeispiel, bei dem die zumindest eine Ausblasöffnung als ein Längsschlitz ausgebildet ist, der sich von der inneren Kanalwandung zur äußeren Kanalwandung erstreckt, ist eine druckseitige Schlitzfläche wellenförmig und eine gegenüberliegende saugseitige Schlitzfläche variationslos ausgebildet. Hierdurch ist die druckseitige Schlitzfläche gegenüber der saugseitigen Schlitzfläche vergrößert. Zudem wird der Fluidstrom durch die Wellenform druckseitig quasi aufgefächert.

Ergänzend kann eine zur druckseitigen Schlitzfläche entgegengesetzte druckseitige Abströmfläche wellenförmig ausgebildet sein, so dass in Kombination mit der zumindest einen Ausblasöffnung sowohl eine passive als auch eine aktive Nachlaufausmischung erfolgt.

Bei einem Ausführungsbeispiel tritt die zumindest eine Ausblasöffnung saugseitig aus dem Profil aus. Die zumindest eine Ausblasöffnung kann dabei als ein Schlitz, als eine Vielzahl von Schlitzen oder aber als eine Vielzahl von bohrungsartigen Öffnungen ausgebildet sein. Die Ausrichtung der zumindest einen Ausblasöffnung und die Form eines stromabwärtigen Hinterkantenabschnitts ist dabei bevorzugterweise derart, dass sich der sogenannte "Coanda-Effekt" ausbilden kann. D.h. der Fluidstrom folgt nach Ablösung von dem Hinterkantenabschnitt dessen Außenkontur, so dass zum einen durch die Ausblasung quasi nur eine profilnahe Grenzschicht energetisiert wird und zum anderen keine Querströmungen in die profilfemen Schichten des saugseitigen Teilstroms eingebracht werden.

Zwischen den Stützrippen kann zumindest eine Strömungsteilerschaufel angeordnet sein, die eine geringere relative Profildicke als die Stützrippen aufweist. Der zumindest einen Strömungsteilerschaufel liegt die Erkenntnis zugrunde, dass Verwirbelungen, Strömungsverluste und/oder Umlenkungseinschränkungen reduziert werden können, wenn zusätzliche Umlenkelemente zwischen den ebenfalls zur Umlenkung der Strömung profilierten Stützrippen angeordnet sind, die im Vergleich mit den Stützrippen als schlankere und/oder verkürzte Strömungsteiler ausgebildet sind.

Bevorzugterweise sind die Strömungsteilerschaufeln im Bereich ihrer Hinterkante ebenfalls mit einer Profilvariation und/oder mit zumindest einer Ausblasöffnung versehen, so dass auch eine passive und/oder eine aktive Nachlaufausmischung der jeweiligen strömungsteilerschaufelseitigen Abströmung erfolgt.

Eine bevorzugte Strömungsmaschine hat einen erfindungsgemäßen Übergangskanal. Dieser bewirkt aufgrund der schnellen Nachlaufausmischung eine verbesserte Zuströmung von Rotorschaufeln stromabwärts der Austrittsfläche des Übergangskanals. Die verbesserte Zuströmung resultiert in minimierten Energieübertragungsverlusten und somit in einem hohen Wirkungsgrad sowie in einer minimierten aerodynamischen Anregung der nachfolgenden Rotorschaufeln und somit in einer Geräuschreduzierung im Vergleich zu Strömungsmaschinen mit einem herkömmlichen Übergangskanal. Der Übergangskanal ist bevorzugterweise turbinenseitig angeordnet, kann jedoch auch verdichterseitig angeordnet sein.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine axiale Schnittansicht und eine teilweise Abwicklung eines Übergangskanals nach einem Ausführungsbeispiel der Erfindung,
- Figur 2: eine perspektivische Darstellung einer Stützrippe mit einer beispielhaften hinterkantenseitigen passiven Nachlaufauschmischung,
- Figur 3: eine Seitenansicht einer Stützrippe mit einer weiteren beispielhaften hinterkantenseitigen passiven Nachlaufauschmischung,
- Figur 4: eine rückwärtige Darstellung einer Stützrippe mit einer beispielhaften aktiven Nachlaufauschmischung,
- Figur 5: eine rückwärtige Darstellung einer Stützrippe mit einer weiteren beispielhaften aktiven Nachlaufauschmischung,
- Figur 6: eine rückwärtige Darstellung einer Stützrippe mit einer beispielhaften hybriden Nachlaufauschmischung,
- Figur 7: eine rückwärtige Darstellung einer Stützrippe mit einer weiteren beispielhaften hybriden Nachlaufauschmischung,
- Figur 8: einen Querschnitt durch eine Stützrippe mit einer seitlichen Ausblasöffnung als aktive Nachlaufauschmischung,
- Figur 9: eine axiale Schnittansicht und eine teilweise Abwicklung eines weiteren beispielhaften Übergangskanals, und
- Figur 10: eine Abwicklung eines weiteren Ausführungsbeispiels des Übergangskanals,

In den Figuren tragen gleiche konstruktive Elemente das gleiche Bezugszeichen, wobei bei mehreren gleichen Elementen in einer Figur aus Gründen der Übersicht lediglich ein Element mit einem Bezugszeichen versehen ist bzw. sein kann.

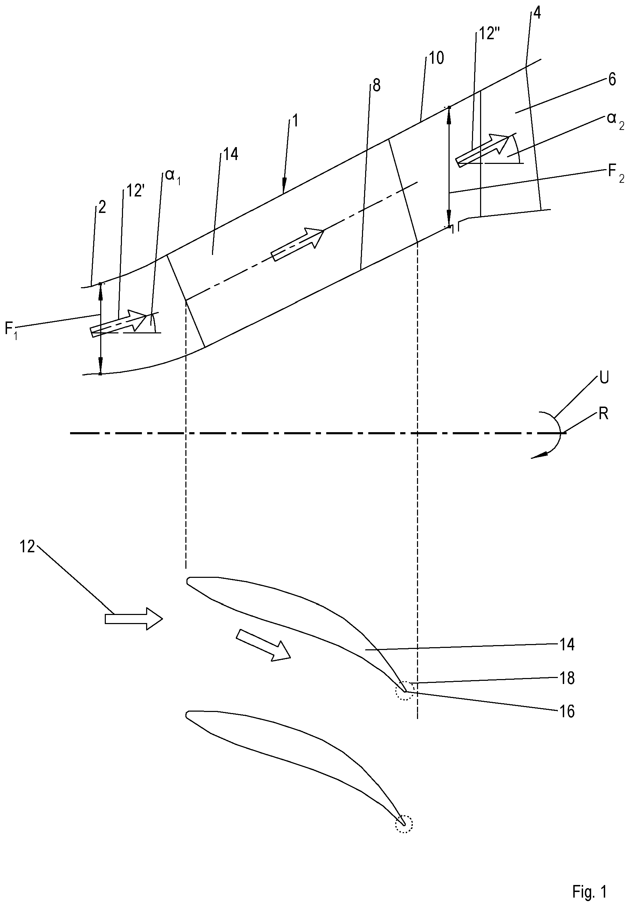

In Figur 1 ist beispielhaft ein Übergangskanal 1 zwischen einer Hochdruckturbine 2 und einer Niederdruckturbine 4 einer axialen Strömungsmaschine wie ein Flugzeugtriebwerk im axialen Halb- bzw. Meridianschnitt (oberer Teil der Figur) sowie in ebener Abwicklung bzw. im Profilschnitt (unterer Teil der Figur) dargestellt.

Der Übergangskanal 1 ist in einem Turbinengehäuse feststehend gelagert, wohingegen die Hochdruckturbine 2 und die Niederdruckturbine 4 jeweils Laufschaufelreihe 6 aufweisen, die um eine Drehachse bzw. Turbinenachse R in Rotationsrichtung U rotieren. Der Übergangskanal 1 umgreift die Drehachse R und hat einen ringförmigen Strömungsquerschnitt. Er hat eine radial innere Kanalwandung 8, eine radial äußere Kanalwandung 10 sowie eine hochdruckturbinenseitige Eintrittsfläche F₁ und eine niederdruckturbinenseitige Austrittsfläche F2. Wie in der Figur 1 gezeigt, ist die Eintrittsfläche F₁ radial innenliegend zur Austrittsfläche F₂ angeordnet, so dass eine den Übergangskanal 1 durchströmende Strömung 12 bezogen auf die Drehachse R radial schräg nach außen geführt wird.

Es hat sich als vorteilhaft gezeigt, wenn ein axiales Flächenverhältnis Austrittsfläche F₂ zu Eintrittsfläche F₁ zwischen 2 und 5 liegt (2 ≤ F₂ / F₁ ≤ 5) und/oder ein Strömungsablenkungswinkel Δα = α₁ - α₂ weniger als 50° beträgt. Wie in Figur 1 skizziert, stehen dabei die Eintrittsfläche F₁ und die Austrittsfläche F₂ senkrecht zur Drehachse R. Der Strömungswinkel α₁ gibt einen Ablenkungswinkel einer Eintrittsströmung 12' in den Übergangskanal 1 zur Drehachse R an. Der Strömungswinkel α₂ gibt einen Ablenkungswinkel einer Austrittströmung 12" aus dem Übergangskanal 1 zur Drehachse R an. Die Strömungswinkel α₁ und α₂ ergeben sich aus den massegemittelten Axial- bzw. Umfangsgeschwindigkeiten cₐₓᵢₐₗ und c_{Umfang} in den Ebenen F₁ und F₂ gemäß α = a + tan (cₐₓᵢₐₗ / c_{Umfang}).

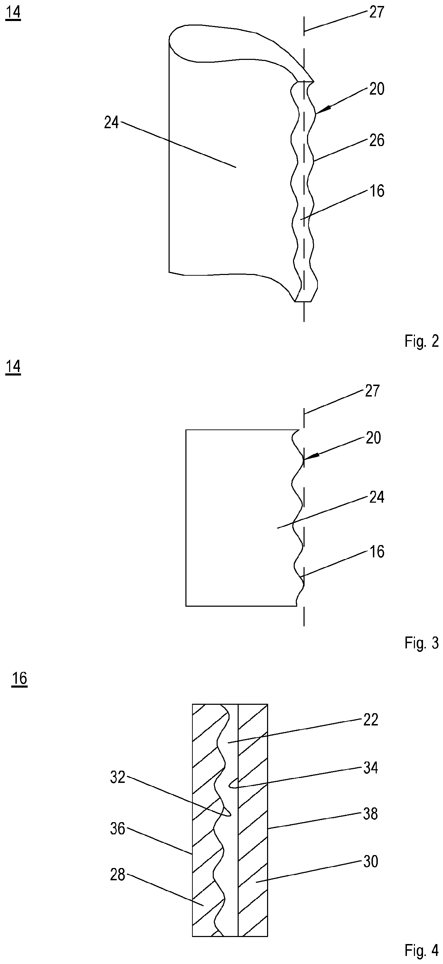

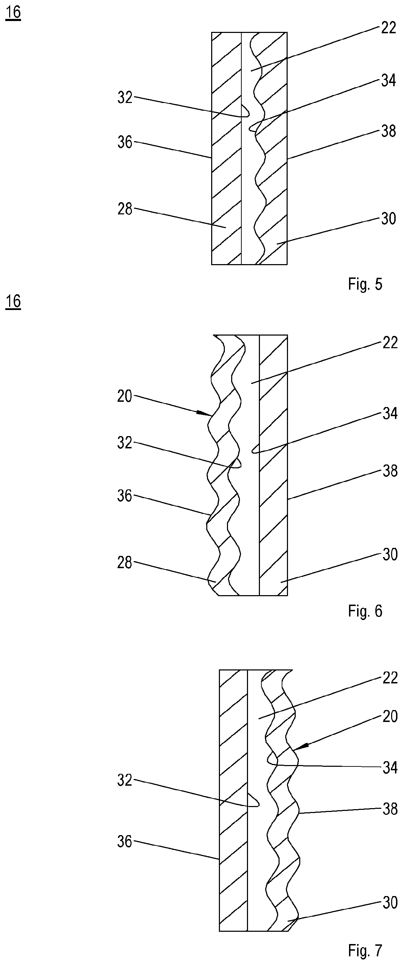

Der Übergangskanal 1 weist zur Versteifung eine Vielzahl von Stützrippen 14 auf, die sich zwischen der inneren Kanalwandung 8 und der äußeren Kanalwandung 10 erstrecken und die in Umfangsrichtung betrachtet gleichmäßig in dem Übergangskanal 1 verteilt sind. Die Stützrippen 14 weisen eine vergleichsweise große relative Dicke auf, um ihre Stützwirkung erfüllen und nicht skizzierte Versorgungsleitungen aufnehmen zu können. Zudem haben sie ein tragflächenartiges Profil zum Umlenken der Strömung 12 in Umfangsrichtung bzw. Rotationsrichtung. Im Bereich ihrer jeweiligen Hinterkante 16 haben sie eine durch einen Kreis angedeutete Nachlaufausmischung 18 in Form einer passiven Nachlaufausmischung 20, (Figuren 2 und 3), in Form zumindest einer aktiven Nachlaufausmischung 22 (Figuren 4, 5 und 8) oder in Form einer kombinierten aktiven und passiven Nachlaufausmischung 18, 20 (Figuren 6 und 7).

Eine in Figur 2 gezeigte beispielhafte passive Nachlaufausmischung ist eine hinterkantenseitige Profilvariation 20, die abwechselnd zur Saugseite 24 und zur entgegengesetzten Druckseite 26 ausgebildet ist. Die Profilvariation 20 hat somit eine Wellenform, die vorzugsweise gleichmäßig ausgebildet ist. Die Hinterkante 16 weist eine Vielzahl von seitlichen Wellenbergen und Wellentälern auf, mittels denen zum einen die Saugseite 24 und die Druckseite 26 im Hinterkantenbereich flächenvergrößert wird. Zum anderen wird ein jeweiliger saugseitiger Teilstrom und ein druckseitiger Teilstrom im Bereich der Hinterkante 16 seitlich bzw. in Umfangsrichtung betrachtet aufgefächert und in radialer Richtung abwechselnd abschnittsweise übereinander geführt. Wie durch die gestrichelte vertikale Hilfslinie 27 angedeutet, ist die Hinterkante 16 gegenüber einer herkömmlichen geradlinigen Hinterkante axial nicht versetzt.

Eine in Figur 3 gezeigte beispielhafte passive Nachlaufausmischung ist eine hinterkantenseitige Profilvariation 20, die in Strömungsrichtung betrachtet wellenförmig ausgebildet ist. Hierdurch wird der jeweilige saugseitige Teilstrom und der druckseitige Teilstrom beim Abströmen in radialer Richtung aufgefächert, wobei aufgrund der durch die Wellenberge und die Wellentäler geschaffenen lokalen Profilverlängerungen bzw. Profilverkürzungen die saug- und druckseitigen Teilströme abschnittsweise zeitlich später (Wellenberg) oder früher (Wellental) von der jeweilegen Stützrippe 14 abströmen, so dass die Zusammenführung der Teilströme in axialer Richtung bzw. in Strömungsrichtung betrachtet gegenüber einer als gestrichelte Hilfslinie 27 angedeuteten herkömmlichen Hinterkante zeitlich vorverlegt ist. Bevorzugterweise ist die Wellenform gleichmäßig ausgebildet.

In Figur 4 ist ein Beispiel einer aktiven Nachlaufausmischung gezeigt. Die Stützrippen 14 weisen hierzu im Bereich ihrer Hinterkanten 16 jeweils eine Ausblasöffnung 22 zum Ausblasen eines Fluids auf. Die Ausblasöffnung 22 ist als ein Längsschlitz ausgebildet, der sich von der inneren Kanalwandung 8 zur äußeren Kanalwandung 10 (s. Fig. 1) erstreckt. Der Längsschlitz 22 liegt auf der Skelettlinie der Stützrippe 14 und zweiteilt somit die Hinterkante 16 in einen Saugseitenabschnitt 28 und einen Druckseitenabschnitt 30. Der Saugseitenabschnitt 28 hat eine die Ausblasöffnung 22 begrenzende saugseitige Schlitzfläche 32 und der Druckseitenabschnitt 28 hat eine gegenüberliegende druckseitige Schlitzfläche 34 zum Begrenzen der Ausblasöffnung 22. Bevorzugterweise ist die saugseitige Schlitzfläche 32 wellenförmig mit einer Vielzahl von Wellenbergen und Wellentälern versehen. Die druckseitige Schlitzfläche 34 ist variationslos und in dem gezeigten Schnitt geradlinig. Zudem sind eine zur saugseitigen Schlitzfläche 32 entgegengesetzte saugseitige Abströmfläche 36 des Saugseitenabschnitts 28 und eine zur druckseitigen Schlitzfläche 34 entgegengesetzte druckseitige Abströmfläche 38 des Druckseitenabschnitts 30 ebenfalls ohne eine Konturvariation ausgebildet. Die saug- und druckseitigen Teilströme werden nach dem Umströmen des Profils hinter der Hinterkante 16 zusammengeführt, wobei durch die Ausblasöfffnung 22 ein Fluidstrom zwischen die Teilströme geblasen wird, der durch die wellenförmige Innenkonturierung der saugseitigen Schlitzfläche 32 der Fluidstrom einseitig, und zwar saugseitig, seitlich aufgefächert wird.

In Figur 5 ist ein weiteres Beispiel einer aktiven Nachlaufausmischung im Bereich einer Hinterkante 16 der Stützrippen 14 gezeigt. Im Unterschied zum vorhergehenden Beispiel nach Figur 4 ist bei diesem Ausführungsbeispiel eine druckseitige Schlitzfläche 34 wellenförmig und eine saugseitige Schlitzfläche 32 variationslos. Die sonstigen, die Hinterkante 16 bildenden Flächen wie eine saugseitige Abströmfläche 36 sowie eine druckseitige Abströmfläche 38 sind bei diesem Ausführungsbeispiel ebenfalls ohne eine Konturvariation ausgebildet. Die saug- und druckseitigen Teilströme werden nach dem Umströmen des Profils hinter der Hinterkante 16 zusammengeführt, wobei durch die Ausblasöfffnung 22 ein Fluidstrom zwischen die Teilströme geblasen wird, der durch die wellenförmige Innenkonturierung der druckseitigen Schlitzfläche 34 der Fluidstrom einseitig, und zwar druckseitig, seitlich aufgefächert wird.

In Figur 6 ist ein Beispiel einer kombinierten aktiven und passiven und somit einer hybriden Nachlaufausmischung 20, 22 gezeigt. In Ergänzung zum aktiven Ausführungsbeispiel nach Figur 4 ist bei diesem hybriden Ausführungsbeispiel ebenfalls die saugseitige Abströmfläche 36 mit einer Profilvariation 20 versehen und somit nicht nur eine saugseitige Schlitzfläche 32. Die Profilvariation 20 ist ebenfalls wellenförmig mit einer Vielzahl von Wellenbergen und Wellentälern ausgebildet. Die druckseitige Abströmfläche 38 des Druckseitenabschnitts 30 ist ohne eine Konturvariation ausgebildet. Somit wird bei diesem hybriden Ausführungsbeispiel zusätzlich zur saugseitigen Auffächerung des Fluidstroms ein saugseitiger Teilstrom passiv seitlich aufgefächert. Die Positionierung der Innenkonturierung und der Profilvariation 20 zueinander ist bevorzugterweise derart, dass ein Wellenberg der Profilvariation 20 im Bereich eines Wellentals der Innenkonturierung und umgekehrt angeordnet ist. Vorzugsweise sind die Profilvariation 20 und die Innenkonturierung identisch ausgebildet.

In Figur 7 ist ein weiteres Beispiel einer kombinierten aktiven und passiven und somit einer hybriden Nachlaufausmischung 20, 22 gezeigt. Im Unterschied zum hybriden Ausführungsbeispiel nach Figur 6 ist bei diesem Ausführungsbeispiel in Ergänzung zum aktiven Ausführungsbeispiel nach Figur 5 ebenfalls die druckseitige Abströmfläche 38 mit einer Profilvariation 20 versehen und somit nicht nur eine druckseitige Schlitzfläche 34. Die Profilvariation 20 ist ebenfalls wellenförmig mit einer Vielzahl von Wellenbergen und Wellentälern versehen. Die saugseitige Abströmfläche 36 des Saugseitenabschnitts 28 ist ohne eine Konturvariation ausgebildet. Somit wird bei diesem hybriden Ausführungsbeispiel zusätzlich zur druckseitigen Auffächerung des Fluidstroms ein druckseitiger Teilstrom passiv seitlich aufgefächert. Die Positionierung der Innenkonturierung und der Profilvariation 20 zueinander ist bevorzugterweise derart, dass ein Wellenberg der Profilvariation 20 im Bereich eines Wellentals der Innenkonturierung und umgekehrt angeordnet ist. Vorzugsweise sind die Profilvariation 20 und die Innenkonturierung identisch ausgebildet.

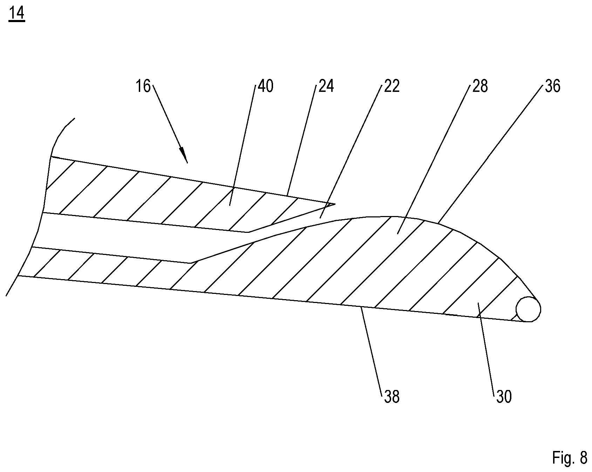

In Figur 8 ist ein Beispiel einer aktiven Nachlaufausmischung gezeigt, bei dem der sogenannte "Coanda-Effekt" ausgenutzt wird. Hierzu sind die Stützrippen 14 im Bereich ihrer Hinterkanten 16 mit jeweils zumindest einer saugseitige Ausblasöffnung 22 zum Ausblasen eines Fluids in eine profilnahe Grenzschicht versehen. Die Ausblasöffnung 22 ist als ein Längsschlitz oder als eine Vielzahl von Bohrungen ausgebildet. Sie teilt die Saugseite 24 in einen vorderen Saugseitenabschnitt 40 und in einen hinteren Saugseitenabschnitt 28. Ein Druckseitenabschnitt 30 hat eine variationslose Abströmfläche 38 und ist in Richtung der Saugseite 24 beulenartig derart erweitert, dass seine Erweiterung den Saugseitenabschnitt 28 mit einer konkaven saugseitigen Abströmfläche 36 bildet. Die Abströmfläche 36 hat eine derartige Außenkontur, dass das aus der Austrittsöffnung 22 ausströmende Fluid nach Ablösung von der Abströmfläche 34 der Außenkontur über einen profilnahen Bereich folgt und somit Querströmungen in profilfeme Teilstromschichten vermieden werden.

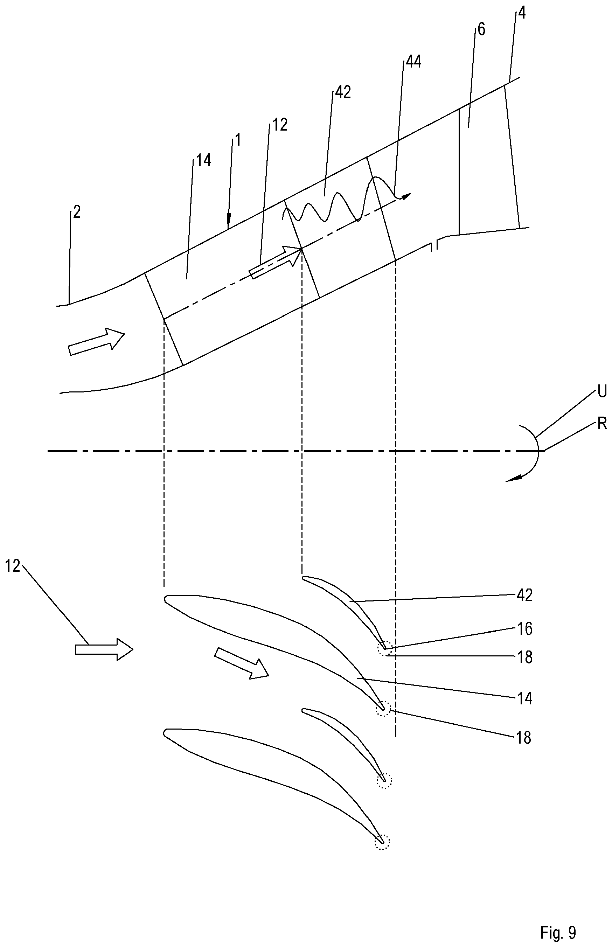

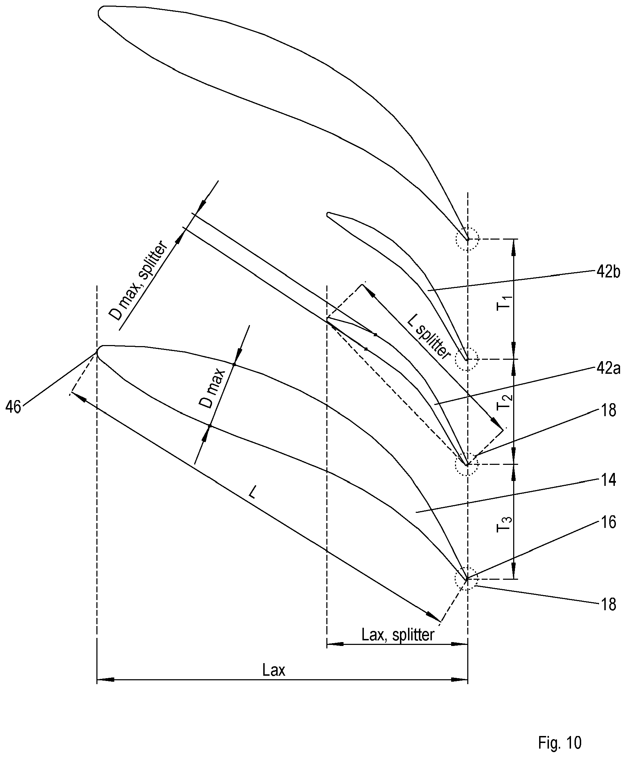

Wie in den Figuren 9 und 10 gezeigt, können in einem stromabwärtigen bzw. hinteren Bereich des Überkanals 1 Strömungsteilerschaufeln bzw. Splitterschaufeln 20 angeordnet sein. Die Splitterschaufeln 20 können einzeln (Figur 9) oder mehrfach (Figur 10) zwischen den Stützrippen 14 angeordnet und ebenfalls mit einer aktiven und/oder passiven Nachlaufausmischung 18 im Bereich ihrer Hinterkanten 16 versehen sein. Die Splitterschaufeln 42 bewirken eine Strömungsteilung zwischen den Stützrippen 14 und tragen zur Umlenkung der Strömung 12 in Umfangsrichtung bei. Die Splitterschaufeln 42 sind kürzer als die Stützrippen 14 und weisen ein Tragflächenprofil auf, welches deutlich schlanker als das Profil der Stützrippen 14 ist.

Wie im oberen Bereich der Figur 9 angedeutet, können sich im hinteren Bereich des Übergangskanals 1 dreidimensionale parasitäre Sekundärströmungen 44 ausbilden. Diese Sekundärströmungen 44 werden durch die zweifache Umlenkung, nämlich die Umlenkung radial nach außen einerseits und die Umlenkung in Umfangsrichtung andererseits, sowie das komplexe Geschwindigkeitsprofil der Strömung 12 induziert. Die Sekundärströmungen 22 können zu einer ungünstigen Anströmung der ersten Laufschaufeln 6 der Niederdruckturbine 4 und zu einer Anregung der Laufschaufeln 6 führen. Durch die Anordnung der schlanken Splitterschaufeln 42 zwischen den dickeren Stützrippen 14 kann die Erzeugung der parasitären Sekundärströmungen 42 deutlich reduziert werden.

In Figur 10 ist die Anordnung von zwei Splitterschaufeln 42a, 42b zwischen benachbarten Stützrippen 18 gezeigt. Es wird angestrebt, dass ein möglichst hoher Anteil der Strömungsumlenkung von den Splitterschaufeln 42 (42a, 42b) übernommen wird. Die Anzahl der langen und schweren Stützrippen 14 wird im Wesentlichen durch die Stabilitätsanforderungen und die Anzahl bzw. die Querschnittsgröße der in den Stützrippen 14 aufzunehmenden Versorgungsleitungen bestimmt.

In weiteren beispielhaften Abwandlungen können jeweils bis zu fünf Splitterschaufeln 42 zwischen zwei Stützrippen 14 angeordnet sein. Gegebenenfalls sind auch mehr als fünf Splitterschaufeln 42 zwischen zwei Stützrippen 14 angeordnet.

Zudem sind in Figur 10 geometrische Größen der Stützrippen 14 und der Splitterschaufeln 42a, 42b angegeben. Eine axiale Bautiefe der Stützrippen 14 ist mit Lₐₓ, eine Profilsehenlänge mit L und eine maximale Profildicke mit Dₘₐₓ angegeben. Die entsprechenden Nomenklaturen sind für die Splitterschaufeln 42a, 42b durch den zusätzlichen Index "Splitter" übertragbar. Eine axiale Länge oder Bautiefe des Übergangskanals 1 selbst kann durch L_{ax, TMTF} angegeben werden. Die axiale Bautiefe L_{ax, TMTF} des Übergangskanals 1 kann mit der axialen Länge oder Bautiefe Lₐₓ der Stützrippen 14 übereinstimmen bzw. definiert sein.

Zusammengefasst können miteinander kombinierbare Merkmale der Stützrippen 14 mit den Splitterschaufeln 42 wie folgt angegeben werden:
a) In dem Übergangskanal sind umlenkende Stützrippen 14 und dünne Splitterschaufeln 42 in Tandembauweise angeordnet;
b) die relative Dicke d_{max, Splitter} / L der Splitterschaufeln 42 ist kleiner als ein Grenzwert
   dₘₐₓ, Splitter / L < 15 %; insbesondere dₘₐₓ, Splitter / L <10 %;
c) die axiale Bautiefe der Splitterschaufeln 42 beträgt
   25 % < L_{ax, Splitter} / L_{ax, TMTF}; insbesondere 30 % < L_{ax, Splitter} / L_{ax, TMTF}; und/oder
   L_{ax, Splitter} / L_{ax, TMTF} <100 %;
d) die Splitterschaufeln 42 erstrecken sich in einem Bereich, der in axialer Richtung frühestens bei 30 % Lₐₓ, _{TMTF} beginnt und bei höchstens 125 % L_{ax, TMTF} endet. Somit sind die Splitterschaufeln 42 gegenüber Vorderkanten 46 der Stützrippen 14 in Strömungsrichtung nach hinten versetzt und können Hinterkanten 16 der Stützrippen 14 nach hinten überragen.

Es hat sich als vorteilhaft erwiesen, wenn bei einer Splitterschaufel 42 die Teilungen T₁ und T₂, bei mehreren Splitterschaufeln 42a, etc. die Teilungen T₁ bis Tₙ (bei n - 1 Splitterschaufeln) unterschiedlich sind. Die Splittersehnenlängen L_{Splitter} können dann auch unterschiedlich sein.

Offenbart sind ein Übergangskanal für eine Strömungsmaschine, insbesondere ein Flugzeugtriebwerk, zum Bilden eines Strömungskanals zwischen einem stromaufwärtigen Strömungsquerschnitt und einem stromabwärtigen Strömungsquerschnitt, mit Stützrippen, die sich zwischen einer radial inneren Kanalwandung und einer radial äußeren Kanalwandung erstrecken und jeweils ein Profil zur Umlenkung einer Strömung von einer Eintrittsfläche zu einer Austrittsfläche des Übergangskanals aufweisen, wobei die Stützrippen jeweils im Bereich ihrer Hinterkante eine Profilvariation und/oder zumindest eine Ausblasöffnung zum Ausblasen eines Fluids aufweisen, sowie eine Strömungsmaschine mit einem derartigen Übergangskanal.

### Bezugszeichenliste

- 1: Übergangskanal
- 2: Hochdruckturbine
- 4: Niederdruckturbine von der
- 6: Laufschaufel
- 8: innere Kanalwandung
- 10: äußere Kanalwandung
- 12: Strömung
- 14: Stützrippe
- 16: Hinterkante
- 18: Nachlaufausmischung
- 20: Profilvariation
- 22: Ausblasöffnung
- 24: Saugseite
- 26: Druckseite
- 27: Hilfslinie
- 28: Saugseitenabschnitt
- 30: Druckseitenabschnitt
- 32: saugseitige Schlitzfläche
- 34: druckseitige Schlitzfläche
- 36: saugseitige Abströmfläche
- 38: druckseitige Abströmfläche
- 40: Saugseitenabschnitt
- 42, 42a, b: Strömungsteilerschaufel / Splitterschaufel
- 44: Sekundärströmung
- 46: Vorderkante

- α₁: Strömungswinkel Eintrittsströmung
- α₁: Strömungswinkel Austrittsströmung
- Δα: Strömungsablenkungswinkel
- dₘₐₓ: Größte Profildicke der Stützrippen
- d_{max,Splitter}: Größte Profildicke der Splitterschaufeln
- F₁: Eintrittsfläche am Anfang des Übergangkanals
- F₂: Austrittsfläche am Ende des Übergangkanals
- L: Profilsehnenlänge der Stützrippen
- L_{Splitter}: Profilsehnenlänge der Splitterschaufeln
- Lₐₓ: Axiale Bautiefe der Stützrippen
- L_{ax,Splitter}: Axiale Bautiefe der Splitterschaufeln
- L_{ax,TMTF}: Axiale Bautiefe des Übergangskanals
- R: Drehachse / Turbinenachse
- T_{1 bis n}: Teilung (Abstand senkrecht zur Drehachse verlaufend) zwischen den Austrittskanten der Stützrippen und der Splitterschaufel)
- U: Rotationsrichtung

## Patentansprüche

1. Übergangskanal (1) für eine Strömungsmaschine, insbesondere ein Flugzeugtriebwerk, zum Bilden eines Strömungskanals zwischen einer Hochdruckturbine und einer Niederdruckturbine zwischen einem stromaufwärtigen Strömungsquerschnitt und einem stromabwärtigen Strömungsquerschnitt, mit Stützrippen (14), die sich zwischen einer radial inneren Kanalwandung (8) und einer radial äußeren Kanalwandung (10) erstrecken und jeweils ein Profil zur Umlenkung einer Strömung von einer Eintrittsfläche (F₁) zu einer Austrittsfläche (F₂) des Übergangskanals (1) aufweisen, **dadurch gekennzeichnet, dass** die Stützrippen (14) jeweils im Bereich ihrer Hinterkante (16) eine Profilvariation (20) für eine passive Nachlaufausmischung und zumindest eine Ausblasöffnung (22) zum Ausblasen eines Fluids für eine aktive Nachlaufausmischung und eine Kühlung der Stützrippen (14) im Bereich ihrer Hinterkanten aufweisen.

2. Übergangskanal nach Anspruch 1, wobei die Hinterkante (16) abwechselnd zur Saugseite (24) und zur Druckseite (26) versetzt ist.

3. Übergangskanal nach Anspruch 1, wobei die Hinterkante (16) in Strömungsrichtung wellenartig ausgebildet ist.

4. Übergangskanal nach Anspruch 1, wobei die zumindest eine Ausblasöffnung (22) zwischen einer Saugseite (24) und der Druckseite (26) aus der Hinterkante (16) austritt.

5. Übergangskanal nach Anspruch 4, wobei die zumindest eine Ausblasöffnung (22) als Längsschlitz ausgebildet ist, der sich von der inneren Kanalwandung (8) zur äußeren Kanalwandung (10) erstreckt, und wobei eine saugseitige Schlitzfläche (32) wellenförmig und eine gegenüberliegende druckseitige Schlitzfläche (34) variationslos ausgebildet ist.

6. Übergangskanal nach Anspruch 4 oder 5, wobei eine zur saugseitigen Schlitzfläche (32) entgegengesetzte saugseitige Abströmfläche (36) wellenförmig ausgebildet ist.

7. Übergangskanal nach Anspruch 4, wobei die zumindest eine Ausblasöffnung (22) als Längsschlitz ausgebildet ist und eine druckseitige Schlitzfläche (34) wellenförmig und eine gegenüberliegende saugseitige Schlitzfläche (32) variationslos ausgebildet ist.

8. Übergangskanal nach Anspruch 4 oder 7, wobei eine zur druckseitigen Schlitzfläche (34) entgegengesetzte druckseitige Abströmfläche (38) wellenförmig ausgebildet ist.

9. Übergangskanal nach Anspruch 1, wobei die Ausblasöffnung (22) saugseitig austritt.

10. Übergangskanal nach einem der vorhergehenden Ansprüche, wobei zwischen den Stützrippen (14) Strömungsteilerschaufeln (42) angeordnet sind, die eine geringere relative Profildicke (d_{max,Splitter} /L) als die Stützrippen (14) aufweisen.

11. Übergangskanal nach Anspruch 10, wobei die Strömungsteilerschaufeln (42) mit einer hinterkantenseitigen Profilvariation (20) und/oder mit zumindest einer Ausblasöffnung (22) versehen sind.

12. Strömungsmaschine mit einem Übergangskanal (1) nach einem der vorhergehenden Ansprüche.

## Claims

1. Transition duct (1) for a turbomachine, in particular an aircraft engine, for forming a flow duct between a high-pressure turbine and a low-pressure turbine between an upstream flow cross section and a downstream flow cross section, comprising support ribs (14) which extend between a radially inner duct wall (8) and a radially outer duct wall (10) and which comprise in each case a profiled region for deflecting a flow from an inlet surface (F₁) to an outlet surface (F₂) of the transition duct (1), **characterized in that** the support ribs (14) each comprise, in the region of the trailing edge thereof (16), a profile variation (20) for passive wake-mixing, and at least one blow-out opening (22) for blowing out a fluid for active wake-mixing, and a cooling stage of the support ribs (14) in the region of the trailing edges thereof.

2. Transition duct according to claim 1, wherein the trailing edge (16) is alternately offset with respect to the suction side (24) and the pressure side (26).

3. Transition duct according to claim 1, wherein the trailing edge (16) is designed so as to be undulating in the flow direction.

4. Transition duct according to claim 1, wherein the at least one blow-out opening (22) emerges from the trailing edge (16) between a suction side (24) and the pressure side (26).

5. Transition duct according to claim 4, wherein the at least one blow-out opening (22) is designed as a longitudinal slot which extends from the inner duct wall (8) to the outer duct wall (10), and wherein a suction-side slot face (32) is undulating and a pressure-side slot face (34), located opposite, is designed so as to be without variation.

6. Transition duct according to either claim 4 or claim 5, wherein a suction-side outflow face (36), which is located opposite the suction-side slot face (32), is designed so as to be undulating.

7. Transition duct according to claim 4, wherein the at least one blow-out opening (22) is designed as a longitudinal slot and a pressure-side slot face (34) is designed so as to be undulating and a suction-side slot face (32), located opposite, is designed so as to be without variation.

8. Transition duct according to either claim 4 or claim 7, wherein a pressure-side outflow face (38), which is located opposite the pressure-side slot face (34), is designed so as to be undulating.

9. Transition duct according to claim 1, wherein the blow-out opening (22) emerges on the suction side.

10. Transition duct according to any of the preceding claims, wherein flow-splitter blades (42) are arranged between the support ribs (14) and have a lower relative profile thickness (d_{max,Splitter}/L) than the support ribs (14).

11. Transition duct according to claim 10, wherein the flow-splitter blades (42) are provided with a trailing-edge-side profile variation (20) and/or with at least one blow-out opening (22).

12. Turbomachine comprising a transition duct (1) according to any of the preceding claims.

## Revendications

1. Canal de transition (1) pour une turbomachine, notamment pour un moteur d'aéronef, pour former un canal d'écoulement entre une turbine haute-pression et une turbine basse-pression, entre une section d'écoulement amont et une section d'écoulement aval, avec des nervures de support (14) qui s'étendent entre une paroi de canal radialement intérieure (8) et une paroi de canal radialement extérieure (10) et qui présentent chacune un profil destiné à dévier un écoulement d'une face d'entrée (F₁) vers une face de sortie (F₂) du canal de transition (1), **caractérisé en ce que** les nervures de support (14) présentent chacune, dans la région de leur bord de fuite (16), plusieurs profils (20) pour un mélange passif à l'aval et au moins une ouverture de soufflage (22) destinée à souffler un fluide pour un mélange actif à l'aval et un refroidissement des nervures de support (14) dans la région de leurs bords de fuite.

2. Canal de transition selon la revendication 1, dans lequel le bord de fuite (16) est décalé alternativement vers le côté aspiration (24) et vers le côté pression (26).

3. Canal de transition selon la revendication 1, dans lequel le bord de fuite (16) a une configuration ondulée dans la direction d'écoulement.

4. Canal de transition selon la revendication 1, dans lequel l'au moins une ouverture de soufflage (22) entre le côté aspiration (24) et le côté pression (26) ressort du bord de fuite (16).

5. Canal de transition selon la revendication 4, dans lequel l'au moins une ouverture de soufflage (22) est conçue en forme d'une fente longitudinale qui s'étend de la paroi intérieure du canal (8) à la paroi extérieure du canal (10), et dans lequel une surface de fente (32) du côté aspiration a une configuration ondulée et une surface de fente opposée (34) du côté pression est conçue sans variation.

6. Canal de transition selon la revendication 4 ou 5, dans lequel une zone de fuite du côté aspiration (36), opposée à la surface de fente du côté aspiration, (32) a une configuration ondulée.

7. Canal de transition selon la revendication 4, dans lequel l'au moins une ouverture de soufflage (22) est conçue en forme d'une fente longitudinale, dans lequel une surface de fente du côté pression (34) a une configuration ondulée et une surface de fente opposée (32) du côté aspiration est conçue sans variation.

8. Canal de transition selon la revendication 4 ou 7, dans lequel une zone de fuite du côté pression (38), opposée à la surface de fente du côté pression (34), présente une configuration ondulée.

9. Canal de transition selon la revendication 1, dans lequel l'ouverture de soufflage (22) ressort du côté aspiration.

10. Canal de transition selon l'une des revendications précédentes, dans lequel des ailettes de division de flux (42) ayant une épaisseur de profil relative (d_{max, Splitter}/L) inférieure à celle des rainures de support (14) sont disposées entre les rainures de support (14).

11. Canal de transition selon la revendication 10, dans lequel les ailettes de division de flux (42) sont dotées d'une variation de profils (20) du côté bord de fuite et/ou d'au moins une ouverture de soufflage (22).

12. Turbomachine ayant un canal de transition (1) selon l'une des revendications précédentes.
